# EUROPEAN PATENT SPECIFICATION

(11) **EP 4 574 676 B1**
(45) Date of publication and mention of the grant of the patent: **18.11.2026**
(21) Application number: 24220967.4
(22) Date of filing: 18.12.2024
(51) Int. Cl.: B64D 37/02, A62C 3/08, B60K 15/067, B60P 7/08, F17C 13/08

(54) **UNIVERSAL VESSEL MOUNTING SYSTEM**
UNIVERSELLES GEFÄSSBEFESTIGUNGSSYSTEM
SYSTÈME UNIVERSEL DE MONTAGE DE RÉCIPIENT

(30) Priority: 19.12.2023 US 202318545009
(43) Date of publication of application: 25.06.2025
(73) Proprietor: Kidde Technologies, Inc., Wilson, NC 27896-8630 (US)
(72) Inventor: SEEBALUCK, Len D., Wake Forest, 27587 (US); ROGERS, Aaron S., Surf City, 28445 (US)
(74) Representative: Dehns

(56) References cited:
- DE-U1- 202016 102 046
- US-A- 3 416 762
- US-A1- 2005 249 568
- US-A1- 2011 174 856
- US-A1- 2017 313 434
- US-A1- 2021 094 461

## Description

### BACKGROUND

The present invention relates to a mounting system for vehicle-borne vessels, and more particularly to a mounting system for aviation fire extinguisher vessels.

Aviation fire extinguisher vessels are traditionally mounted to aircraft structures using secondary mounting plates and vessel-attached mounting lugs. Although considered suitable for the intended purpose, in such mounting systems, the vessel-attached lugs bear a majority of the vessel's weight. Furthermore, the mounting hardware can require the vessel to be oriented at a non-optimal discharge angle. As such, improved mounting systems are desirable.

US 3 416 762 A discloses restraining means for pillow tanks.

US 2011/0174856 A1 discloses a tank holding mechanism for mounting a gas tank in a vehicle.

### SUMMARY

According to an aspect of the present invention, there is provided a vessel mounting system for a vehicle as claimed in claim 1. Some embodiments of this aspect are provided in claims dependent from claim 1.

According to another aspect of the present invention, there is provided a method of mounting a vessel to a structure in a vehicle using a mounting system as claimed in claim 14. An embodiment of this aspect is provided in a claim dependent from claim 14.

### BRIEF DESCRIPTION OF THE DRAWINGS

FIG. 1A is a simplified illustration of a first vessel supported by a first mounting system.
FIG. 1B is a simplified illustration of a second vessel supported by a substantially similar second mounting system.
FIG. 2 is a simplified illustration of a flexible strap belonging to a mounting system, such as the mounting systems of FIGS. 1A and 1B.
FIG. 3 is a perspective cross-sectional view of a clamp sleeve belonging to the flexible strap of FIG. 2.
FIG. 4 is a simplified illustration of mounting hardware of a mounting system, such as the mounting system of FIGS. 1A and 1B.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art. The figures may not be drawn to scale, and applications and embodiments of the present invention may include features and components not specifically shown in the drawings.

### DETAILED DESCRIPTION

Federal aviation regulations require fire extinguishers and fixed fire systems throughout an aircraft. However, traditional halon-based systems are being phased out in favor of low or zero ODP (ozone depletion potential) agents. Such agents often require larger, heavy vessels than halon. Furthermore, some new aircraft designs have fewer load-bearing structures to which vessels can be attached. Accordingly, the disclosure presents a universal mounting system for use with various fire suppression vessels in both existing and future aircraft designs, as the mounting systems are highly customizable to the vessel. It is worth noting that the mounting systems described herein need not be limited to aviation and/or fire suppression applications, for example, with utility in other types of vehicles (e.g., marine, terrestrial, etc.), as well as non-fire extinguishing pressure vessels, such as oxygen tanks for an aircraft's oxygen system, and/or the compressed gas cylinders used for inflating escape slides.

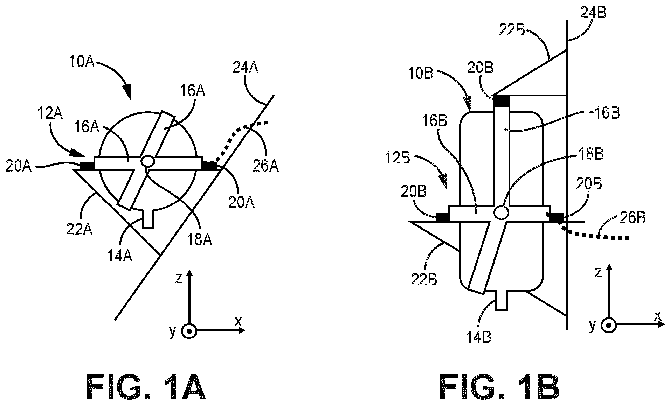

FIGS. 1A and 1B are simplified illustrations showing, respectively, vessel 10A supported by mounting system 12A and vessel 10B supported by mounting system 12B. Vessel 10A is a spherical pressure vessel and vessel 10B is a cylindrical pressure vessel, each of which can contain one or a combination of fire extinguishing/suppressing agents. Such agents can be expelled from outlet nozzles 14A, 14B, which are preferably disposed at the gravitational bottom of vessels 10A and 10B, respectively, when mounted to permit optimal discharge of the agent(s) when activated.

Mounting system 12A includes at least two flexible support straps 16A, each of which can be adjustable to circumscribe vessel 10A in the desired direction, as is discussed in greater detail below. At least one strap mating coupler 18A releasably secures straps 16A to one another in at least one overlapping location of straps 16A. Lugs 20A can be attached to strap 16A to support vessel 10A upon and attach to bracket 22A, which can be an aircraft-based structure attached to bulkhead 24A, or other load-bearing structure (e.g., rail, column, etc.). In some existing mounting systems, lugs are attached to the vessel, (e.g., via welding), and the weight of the vessel is borne upon the lugs as concentrated point loads. Over time, these point loads can compromise the vessel's integrity (e.g., causing cracks at the welds), causing damage and/or rendering the vessel inoperable. However, in system 12A, lugs 20A are attached to strap 16A, such that these loads are not placed on vessel 10A. Furthermore, the combinations of lugs 20A and multiple interconnected straps 16A supports vessel 10A in each of the x, y, and z directions, thereby distributing the loads and reducing the vessel fatigue risk. Adapting system 12A such that lugs 20A are attached to straps 16A instead of fixed points on vessel 10A allows vessel 10A to be optimally restrained to the surrounding aircraft structure. Vessel 10A can therefore be designed with minimal wall thickness (thereby minimizing weight) based on its size and the type of agent contained within, since it need not have welds for attachment of lugs 20A. Finally, should any lug 20A be damaged, it can easily be replaced with no loss of functionality of the more expensive vessel 10A.

Mounting system 12B is substantially similar to mounting system 12A, having one or more straps 16B circumscribing vessel 10B, strap mating coupler(s) 18B, lugs 20B attached to the horizontally disposed (i.e., along the x-axis) strap 16B to support vessel 10B upon bracket 22B which is attached to bulkhead 24B. System 12B differs slightly in that, because of the additional bracket 22B above vessel 10B, a lug 20B is also attached to the vertically extending strap 16B to secure vessel 10B to the second bracket 22B. Such lug 20B can alternatively be a hook in another embodiment. System 12B also supports 10B in each of the x, y, and z directions. It is also worth mentioning that straps 16A and 16B can be disposed about vessels 10A and 10B, respectively, without obstructing nozzles 14A or 14B, and further permitting the optimal orientation of vessels 10A and 10B with nozzles 14A and 14B at the respective gravitational bottoms. It is further worth mentioning that in some embodiments, grounding wires 26A and 26B can be connected to a component of system 12A and 12B, respectively, to electrically connect vessels systems 12A and 12B to a grounding point on the aircraft.

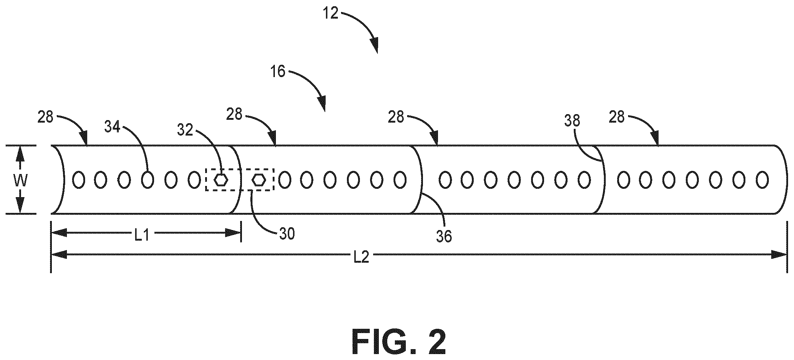

FIG. 2 is a simplified illustration showing strap 16 of mounting system 12, which can be substantially similar to straps 16A and 16B of mounting systems 12A and 12B, respectively, as described above. Strap 16 is formed from multiple clamp sleeves 28, each of which is arranged in an end-to-end manner and attached to each neighboring clamp sleeve 28 using track coupler 30 (represented in transparency by dashed lines) and bolts 32. Each clamp sleeve 28 includes a number of holes 34 extending completely through, in most cases, the thickness of clamp sleeve 28. Holes 34 can be used to interconnect various couplers to a respective clamp sleeve 28, as is discussed in greater detail below. Each clamp sleeve 28 can further have a length L1 and a width W. Length L1 can generally range from 2 in (50.8 mm) to 12 in (304.8 mm), and can more specifically be 2 in, 3 in (76.2 mm), or 6 in (152.4 mm) in some embodiments. In general, any number from two to *n* clamp sleeves 28 of uniform or varied lengths L1 can be attached to form a strap 16 with the desired overall length L2 of strap 16. Width W can nominally be 2 in, but greater widths (e.g., 3 in) can be used with larger and/or heavier vessels. Each clamp sleeve 28 can have opposing first and second ends 36 and 38, and more specifically, concave end 36 and a convex end 38, with concave end 36 being configured to mate with a convex end 38 of an adjacent clamp sleeve 28, and convex end 38 being configured to mate with a concave end 38 of another adjacent clamp sleeve 28. Further, strap 16 can be made to fully circumscribe a vessel (e.g., 10A or 10B) by mating the concave end 36 of one outermost clamp sleeve 28 to the convex end of the opposing outermost clamp sleeve 28, such that strap 16 forms an enclosed loop. End 36 and/or 38 can be straight or have some kind of male-female configuration in alternative embodiments.

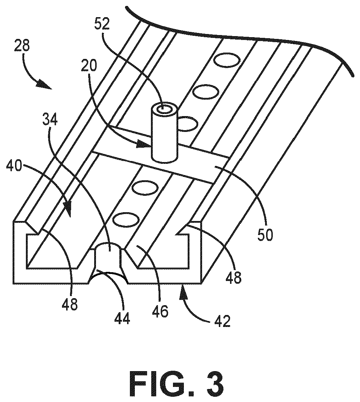

FIG. 3 is a perspective cross-sectional view of a portion of an individual clamp sleeve 28 showing first, external (i.e., outward facing) side 40 in greater detail. Clamp sleeve 28 can be formed from a lightweight flexible material such as a metallic material (e.g., steel) or a composite material (e.g., Kevlar). Second, internal (i.e., vessel facing) side 42 can be generally planar/flat and can include countersinks (or counterbores) 44 aligned with respective holes 34, allowing the various fasteners (e.g., bolts 32, lugs 20, etc.) to sit inward of the surface of internal side 42. This is preferable to prevent contact between the fasteners and the supported vessel (e.g., 10A or 10B). Internal side 42 can further include a polymeric coating to create friction between the vessel and internal side 42 for a secure fit between strap 16 and the vessel.

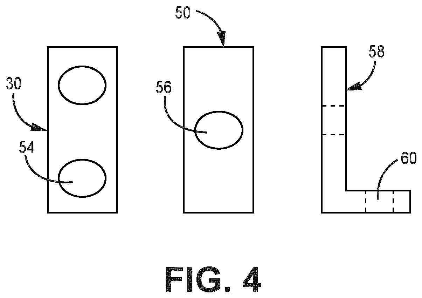

External side 40 includes longitudinally extending boss region 46 in which holes 34 are formed. External side 40 further includes a longitudinally extending lip 48 on each side of boss region 46. Lips 48 and boss region 46 cooperate to retain various mounting hardware. For example, FIG. 3 shows lug coupler 50 and lug 20 (substantially similar to lugs 20A and 20B) connected to clamp sleeve 28. Lug coupler 50 can be inserted into external side 40 such that it overlaps with and is retained by lips 48. Lug coupler 50 includes a hole (shown and labeled in FIG. 4) which is aligned with a desired hole 34 in clamp sleeve 28 at a location where strap 16 is expected to meet with an aircraft structure (e.g., bracket 22A or 22B) so that lug 20 can be inserted to mate with the aircraft structure. Accordingly, lug 20 can include hole 52 which can be aligned with a hole in the aircraft structure, and through which a fastener can be inserted.

FIG. 4 is a simplified illustration of various mounting hardware that can be used with clamp sleeves 28. Beginning from the left is track coupler 30 (also shown in FIG. 2) used to couple two clamp sleeves 28. Track coupler 30 is planar with at least two holes 54, one of each aligning with a hole 34 on each clamp sleeve 28 for receiving bolts 32. At the center is lug coupler 50 which is similarly planar and has at least one hole 56 for aligning with a hole 34 of clamp sleeve 28 and through which lug 20 or other suitable coupling device can be inserted. On the right is an L-shaped bracket 58 having holes 60, one of which can align with a hole 34 on clamp sleeve 28 and the other of which can align with a hole on the external mounting structure. Bracket 58 can be used in addition to, or instead of lug coupler 50 and lug 20 depending on the type and/or position of external support structure available. Bracket 58 need not be L-shaped in an alternative embodiment. Track coupler 30, lug coupler 50, and bracket 58 can all be formed from a metallic material (e.g., stainless steel).

Mounting system 12 can be packaged as a kit including multiple clamp sleeves 28 of various lengths, multiple track couplers 30 and bolts 32 (including matching nuts and washers), multiple lug couplers 50 and lugs 20, multiple brackets 58, multiple strap mating couplers (shown in FIGS 1A and 1B as 18A and 18B), and at least one grounding wire (shown in FIGS. 1A and 1B as 26A and 26B). To assemble mounting system 12, the user can, from such a kit, select the desired number and length of clamp sleeves 28 needed to circumscribe a particular vessel in one direction. The selected clamps sleeves 28 can be assembled end-to-end using track couplers 30 and bolts 32 to form a strap 16. Lug couplers 50 with lugs 20 and/or brackets 58 can be attached to clamp sleeves 28 wherever the respective strap 16 needs to interface with/attach to an external support structure. At least one additional strap 16 can be similarly assembled and sized to circumscribe the vessel in a different (i.e., non-parallel) direction. In some cases, the straps will have different lengths (i.e., L2 of FIG. 2), such as with a vessel longer in one direction (e.g., vessel 10B of FIG. 1B). Straps 16 can then be secured around the vessel by securing together the free ends 36, 38 of each strap 16. Straps 16 can then be secured together at overlapping points using strap mating couplers. The various lugs 20 and/or brackets 58 can then be used to secure the vessel to the external support structure of the aircraft. System 12 can be applied to different vessel configurations and is not unique to a single vessel mounting configuration. Thus, the vessel installers/maintainers can utilize the common mounting kits for multiple different vessel configurations to permit economic installations that are significantly cost reduced and stronger than the current vessel fixed lug mounting approaches.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A vessel mounting system (12A;12B) for a vehicle, the mounting system (12A;12B) comprising:
a first flexible strap (16A;16B) configured to circumscribe a vessel (10A;10B) in a first direction;
a second flexible strap (16A;16B) configured to circumscribe the vessel (10A;10B) in a second direction such that the second flexible strap (16A;16B) and the first flexible strap (16A;16B) overlap in at least one location;
a strap mating coupler (18A;18B) securing the first flexible strap (16A;16B) to the second flexible strap (16A;16B) at the at least one location; and
at least one coupling device (20A;20B) connected to the first flexible strap (16A;16B) configured to mate with a structure (22A;22B) on the vehicle;
**characterised in that**:
each of the first flexible strap (16A;16B) and the second flexible strap (16A;16B) is formed from a plurality of clamp sleeves (28) connected in an end-to-end manner; and
each of the plurality of clamp sleeves (28) is attached to a neighboring clamp sleeve using a first track mating coupler (30) and bolts (32).

2. The mounting system (12A;12B) of claim 1, wherein each of the plurality of clamp sleeves (28) comprises:
a first side (40) comprising:
a longitudinally extending boss region (46); and
a lip (48) on each side of the boss region (46); and
an opposing second side (42), wherein a plurality of holes (34) extend through the boss region (46) from the first side (40) to the second side (42).

3. The mounting system (12A;12B) of claim 2, and further comprising one of:
a plurality of countersinks in the second side (42) aligning with respective ones of the plurality of holes (34); and
a plurality of counterbores in the second side (42) aligning with respective ones of the plurality of holes (34).

4. The mounting system (12A;12B) of claim 2 or 3, wherein:
the first track mating coupler (30) connects a first of the plurality of clamp sleeves (28) to a second of the plurality of clamp sleeves (28), the coupler (30) having a first hole (54) aligned with a hole (34) of the first clamp sleeve and a second hole aligned with a hole of the second clamp sleeve; and
the mounting system (12A;12B) comprises a bolt (32) extending through each of the first hole (54) and the second hole.

5. The mounting system (12A;12B) of claim 4, and further comprising:
a second track mating coupler connecting a third of the plurality of clamp sleeves to the second of the plurality of clamp sleeves, the coupler having a first hole aligned with a hole of the second clamp sleeve and a second hole aligned with a hole of the third clamp sleeve; and
a bolt extending through each of the first hole and the second hole.

6. The mounting system (12A;12B) of any one of claims 2-5, wherein the coupling device (20A;20B) connected to the first flexible strap (16A;16B) is a lug; and wherein the mounting system (12A;12B) further comprises:
a planar lug coupler (50) extending across the boss region (46) and retained by each lip (48),
wherein a hole (56) in the lug coupler (50) aligns with one of the plurality of holes (34) in the clamp sleeve (28); and
wherein the lug extends through the one of the plurality of holes (34) in the clamp sleeve (28) and the hole (56) in the lug coupler (50).

7. The mounting system (12A;12B) of claim 6, and further comprising:
at least one additional coupling device connected to the first flexible strap (16A;16B) or the second flexible strap (16A;16B) and configured to mate with a structure on the vehicle.

8. The mounting system (12A;12B) of claim 7, wherein the at least one additional coupling device is a lug.

9. The mounting system (12A;12B) of claim 7 or 8, wherein the at least one additional coupling device is a bracket.

10. The mounting system (12A;12B) of any one of claims 2-9, wherein each of the plurality of clamp sleeves (28) is formed from one of:
a metallic material; and
a composite material.

11. The mounting system (12A;12B) of claim 10, wherein each of the plurality of clamp sleeves (28) further comprises:
a polymeric material on the second side (42).

12. The mounting system (12A;12B) of any preceding claim, wherein the first direction of the first flexible strap (16A;16B) is non-parallel to the second direction of the second flexible strap (16A;16B).

13. The mounting system (12A;12B) of any preceding claim, wherein the first flexible strap (16A;16B) has a first length, and wherein the second flexible strap (16A;16B) has a second length; optionally wherein the first length is different than the second length.

14. A method of mounting a vessel (10A;10B) to a structure in a vehicle using a mounting system (12A;12B), the method comprising:
circumscribing the vessel (10A;10B) with a first flexible strap (16A;16B) in a first direction along the vessel (10A;10B);
circumscribing the vessel (10A;10B) with a second flexible strap (16A;16B) in a second direction non-parallel to the first direction; and
connecting at least one coupling device (20A;20B) extending from the first flexible strap (16A;16B) to a structure (22A;22B) of the vehicle,
**characterised in that**:
the method further comprises assembling each of the first flexible strap (16A;16B) and the second flexible strap (16A;16B) by connecting a plurality of clamp sleeves (28) in an end-to-end manner using a first track mating coupler (30) and bolts (32).

15. The method of claim 14, and further comprising securing the first flexible strap (16A;16B) to the second flexible strap (16A;16B) in at least one overlapping location using a strap mating coupler (18A;18B); and/or wherein the first flexible strap (16A;16B) has a first length, and wherein the second flexible strap (16A;16B) has a second length that is different than the first length.

## Patentansprüche

1. Ein Behältermontagesystem (12A;12B) für ein Fahrzeug, wobei das Montagesystem (12A;12B) umfasst:
einen ersten flexiblen Riemen (16A;16B), der dazu ausgebildet ist, einen Behälter (10A;10B) in einer ersten Richtung zu umschließen;
einen zweiten flexiblen Riemen (16A;16B), der dazu ausgebildet ist, den Behälter (10A;10B) in einer zweiten Richtung derart zu umschließen, dass sich der zweite flexible Riemen (16A;16B) und der erste flexible Riemen (16A;16B) an mindestens einer Stelle überlappen;
eine Riemenverbindungskupplung (18A;18B), die den ersten flexiblen Riemen (16A;16B) an der mindestens einen Stelle mit dem zweiten flexiblen Riemen (16A;16B) sichert; und
mindestens eine Kupplungsvorrichtung (20A;20B), die mit dem ersten flexiblen Riemen (16A;16B) verbunden ist und dazu ausgebildet ist, mit einer Struktur (22A;22B) am Fahrzeug zusammenzuwirken;
**dadurch gekennzeichnet, dass**:
jeder von dem ersten flexiblen Riemen (16A;16B) und dem zweiten flexiblen Riemen (16A;16B) aus einer Vielzahl von Klemmhülsen (28) gebildet ist, die Ende-an-Ende miteinander verbunden sind; und
jede der Vielzahl von Klemmhülsen (28) mit einer benachbarten Klemmhülse mittels einer ersten Schienenverbindungskupplung (30) und Schrauben (32) verbunden ist.

2. Das Montagesystem (12A;12B) nach Anspruch 1, wobei jede der Vielzahl von Klemmhülsen (28) umfasst:
eine erste Seite (40), umfassend:
einen sich longitudinal erstreckenden Vorsprungsbereich (46); und
eine Lippe (48) an jeder Seite des Vorsprungsbereichs (46); und
eine gegenüberliegende zweite Seite (42), wobei sich eine Vielzahl von Löchern (34) durch den Vorsprungsbereich (46) von der ersten Seite (40) zur zweiten Seite (42) erstreckt.

3. Das Montagesystem (12A;12B) nach Anspruch 2, ferner umfassend eines von:
einer Vielzahl von Senkungen in der zweiten Seite (42), die mit jeweiligen der Vielzahl von Löchern (34) ausgerichtet sind; und
einer Vielzahl von Senklöchern in der zweiten Seite (42), die mit jeweiligen der Vielzahl von Löchern (34) ausgerichtet sind.

4. Das Montagesystem (12A;12B) nach Anspruch 2 oder 3, wobei:
die erste Schienenverbindungskupplung (30) eine erste der Vielzahl von Klemmhülsen (28) mit einer zweiten der Vielzahl von Klemmhülsen (28) verbindet, wobei die Kupplung (30) ein erstes Loch (54), das mit einem Loch (34) der ersten Klemmhülse ausgerichtet ist, und ein zweites Loch, das mit einem Loch der zweiten Klemmhülse ausgerichtet ist, aufweist; und
das Montagesystem (12A;12B) eine Schraube (32) umfasst, die sich durch jedes von dem ersten Loch (54) und dem zweiten Loch erstreckt.

5. Das Montagesystem (12A;12B) nach Anspruch 4, ferner umfassend:
eine zweite Schienenverbindungskupplung, die eine dritte der Vielzahl von Klemmhülsen mit der zweiten der Vielzahl von Klemmhülsen verbindet, wobei die Kupplung ein erstes Loch, das mit einem Loch der zweiten Klemmhülse ausgerichtet ist, und ein zweites Loch, das mit einem Loch der dritten Klemmhülse ausgerichtet ist, aufweist; und
eine Schraube, die sich durch jedes von dem ersten Loch und dem zweiten Loch erstreckt.

6. Das Montagesystem (12A;12B) nach einem der Ansprüche 2-5, wobei die mit dem ersten flexiblen Riemen (16A;16B) verbundene Kupplungsvorrichtung (20A;20B) eine Lasche ist; und wobei das Montagesystem (12A;12B) ferner umfasst:
eine ebene Laschenkupplung (50), die sich über den Vorsprungsbereich (46) erstreckt und von jeder Lippe (48) gehalten wird,
wobei ein Loch (56) in der Laschenkupplung (50) mit einem der Vielzahl von Löchern (34) in der Klemmhülse (28) ausgerichtet ist; und
wobei sich die Lasche durch das eine der Vielzahl von Löchern (34) in der Klemmhülse (28) und das Loch (56) in der Laschenkupplung (50) erstreckt.

7. Das Montagesystem (12A;12B) nach Anspruch 6, ferner umfassend:
mindestens eine zusätzliche Kupplungsvorrichtung, die mit dem ersten flexiblen Riemen (16A;16B) oder dem zweiten flexiblen Riemen (16A;16B) verbunden ist und dazu ausgebildet ist, mit einer Struktur am Fahrzeug zusammenzuwirken.

8. Das Montagesystem (12A;12B) nach Anspruch 7, wobei die mindestens eine zusätzliche Kupplungsvorrichtung eine Lasche ist.

9. Das Montagesystem (12A;12B) nach Anspruch 7 oder 8, wobei die mindestens eine zusätzliche Kupplungsvorrichtung eine Halterung ist.

10. Das Montagesystem (12A;12B) nach einem der Ansprüche 2-9, wobei jede der Vielzahl von Klemmhülsen (28) aus einem von Folgenden gebildet ist:
einem metallischen Material; und
einem Verbundmaterial.

11. Das Montagesystem (12A;12B) nach Anspruch 10, wobei jede der Vielzahl von Klemmhülsen (28) ferner umfasst:
ein polymeres Material auf der zweiten Seite (42).

12. Das Montagesystem (12A;12B) nach einem der vorhergehenden Ansprüche, wobei die erste Richtung des ersten flexiblen Riemens (16A;16B) nicht parallel zur zweiten Richtung des zweiten flexiblen Riemens (16A;16B) ist.

13. Das Montagesystem (12A;12B) nach einem der vorhergehenden Ansprüche, wobei der erste flexible Riemen (16A;16B) eine erste Länge aufweist, und wobei der zweite flexible Riemen (16A;16B) eine zweite Länge aufweist; wobei optional die erste Länge von der zweiten Länge verschieden ist.

14. Ein Verfahren zum Montieren eines Behälters (10A;10B) an einer Struktur in einem Fahrzeug unter Verwendung eines Montagesystems (12A;12B), wobei das Verfahren umfasst:
Umschließen des Behälters (10A;10B) mit einem ersten flexiblen Riemen (16A;16B) in einer ersten Richtung entlang des Behälters (10A;10B);
Umschließen des Behälters (10A;10B) mit einem zweiten flexiblen Riemen (16A;16B) in einer zweiten Richtung, die nicht parallel zur ersten Richtung ist; und
Verbinden mindestens einer Kupplungsvorrichtung (20A;20B), die sich von dem ersten flexiblen Riemen (16A;16B) erstreckt, mit einer Struktur (22A;22B) des Fahrzeugs,
**dadurch gekennzeichnet, dass**:
das Verfahren ferner das Zusammenbauen jedes von dem ersten flexiblen Riemen (16A;16B) und dem zweiten flexiblen Riemen (16A;16B) durch Verbinden einer Vielzahl von Klemmhülsen (28) Ende-an-Ende mittels einer ersten Schienenverbindungskupplung (30) und Schrauben (32) umfasst.

15. Das Verfahren nach Anspruch 14, ferner umfassend das Sichern des ersten flexiblen Riemens (16A;16B) an dem zweiten flexiblen Riemen (16A;16B) an mindestens einer Überlappungsstelle mittels einer Riemenverbindungskupplung (18A;18B); und/oder wobei der erste flexible Riemen (16A;16B) eine erste Länge aufweist, und wobei der zweite flexible Riemen (16A;16B) eine zweite Länge aufweist, die von der ersten Länge verschieden ist.

## Revendications

1. Système de montage de récipient (12A;12B) pour un véhicule, le système de montage (12A;12B) comprenant :
une première sangle flexible (16A;16B) configurée pour circonscrire un récipient (10A;10B) dans une première direction ;
une deuxième sangle flexible (16A;16B) configurée pour circonscrire le récipient (10A;10B) dans une deuxième direction de telle sorte que la deuxième sangle flexible (16A;16B) et la première sangle flexible (16A;16B) se chevauchent en au moins un emplacement ;
un coupleur d'accouplement de sangles (18A;18B) fixant la première sangle flexible (16A;16B) à la deuxième sangle flexible (16A;16B) audit au moins un emplacement ; et
au moins un dispositif de couplage (20A;20B) relié à la première sangle flexible (16A;16B) configuré pour s'accoupler avec une structure (22A;22B) sur le véhicule ;
**caractérisé en ce que** :
chacune de la première sangle flexible (16A;16B) et de la deuxième sangle flexible (16A;16B) est formée d'une pluralité de manchons de serrage (28) reliés bout à bout ; et
chacun de la pluralité de manchons de serrage (28) est attaché à un manchon de serrage voisin au moyen d'un premier coupleur d'accouplement à rail (30) et de boulons (32).

2. Le système de montage (12A;12B) de la revendication 1, dans lequel chacun de la pluralité de manchons de serrage (28) comprend :
un premier côté (40) comprenant :
une zone de bossage s'étendant longitudinalement (46) ; et
une lèvre (48) de chaque côté de la zone de bossage (46) ; et
un deuxième côté opposé (42), dans lequel une pluralité de trous (34) s'étendent à travers la zone de bossage (46) depuis le premier côté (40) jusqu'au deuxième côté (42).

3. Le système de montage (12A;12B) de la revendication 2, et comprenant en outre l'un de :
une pluralité de fraisures dans le deuxième côté (42) s'alignant avec des trous respectifs de la pluralité de trous (34) ; et
une pluralité de lamages dans le deuxième côté (42) s'alignant avec des trous respectifs de la pluralité de trous (34).

4. Le système de montage (12A;12B) de la revendication 2 ou 3, dans lequel :
le premier coupleur d'accouplement à rail (30) relie un premier de la pluralité de manchons de serrage (28) à un deuxième de la pluralité de manchons de serrage (28), le coupleur (30) ayant un premier trou (54) aligné avec un trou (34) du premier manchon de serrage et un deuxième trou aligné avec un trou du deuxième manchon de serrage ; et
le système de montage (12A;12B) comprend un boulon (32) s'étendant à travers chacun du premier trou (54) et du deuxième trou.

5. Le système de montage (12A;12B) de la revendication 4, et comprenant en outre :
un deuxième coupleur d'accouplement à rail reliant un troisième de la pluralité de manchons de serrage au deuxième de la pluralité de manchons de serrage, le coupleur ayant un premier trou aligné avec un trou du deuxième manchon de serrage et un deuxième trou aligné avec un trou du troisième manchon de serrage ; et
un boulon s'étendant à travers chacun du premier trou et du deuxième trou.

6. Le système de montage (12A;12B) de l'une quelconque des revendications 2 à 5, dans lequel le dispositif de couplage (20A;20B) relié à la première sangle flexible (16A;16B) est une ferrure ; et dans lequel le système de montage (12A;12B) comprend en outre :
un coupleur de ferrure plan (50) s'étendant à travers la zone de bossage (46) et retenu par chaque lèvre (48),
dans lequel un trou (56) dans le coupleur de ferrure (50) s'aligne avec l'un de la pluralité de trous (34) dans le manchon de serrage (28) ; et
dans lequel la ferrure s'étend à travers l'un de la pluralité de trous (34) dans le manchon de serrage (28) et le trou (56) dans le coupleur de ferrure (50).

7. Le système de montage (12A;12B) de la revendication 6, et comprenant en outre :
au moins un dispositif de couplage supplémentaire relié à la première sangle flexible (16A;16B) ou à la deuxième sangle flexible (16A;16B) et configuré pour s'accoupler avec une structure sur le véhicule.

8. Le système de montage (12A;12B) de la revendication 7, dans lequel l'au moins un dispositif de couplage supplémentaire est une ferrure.

9. Le système de montage (12A;12B) de la revendication 7 ou 8, dans lequel l'au moins un dispositif de couplage supplémentaire est un support.

10. Le système de montage (12A;12B) de l'une quelconque des revendications 2 à 9, dans lequel chacun de la pluralité de manchons de serrage (28) est formé de l'un de :
un matériau métallique ; et
un matériau composite.

11. Le système de montage (12A;12B) de la revendication 10, dans lequel chacun de la pluralité de manchons de serrage (28) comprend en outre :
un matériau polymère sur le deuxième côté (42).

12. Le système de montage (12A;12B) de l'une quelconque des revendications précédentes, dans lequel la première direction de la première sangle flexible (16A;16B) est non parallèle à la deuxième direction de la deuxième sangle flexible (16A;16B).

13. Le système de montage (12A;12B) de l'une quelconque des revendications précédentes, dans lequel la première sangle flexible (16A;16B) a une première longueur, et dans lequel la deuxième sangle flexible (16A;16B) a une deuxième longueur ; optionnellement dans lequel la première longueur est différente de la deuxième longueur.

14. Procédé de montage d'un récipient (10A;10B) sur une structure dans un véhicule à l'aide d'un système de montage (12A;12B), le procédé comprenant :
la circonscription du récipient (10A;10B) avec une première sangle flexible (16A;16B) dans une première direction le long du récipient (10A;10B) ;
la circonscription du récipient (10A;10B) avec une deuxième sangle flexible (16A;16B) dans une deuxième direction non parallèle à la première direction ; et
la connexion d'au moins un dispositif de couplage (20A;20B) s'étendant depuis la première sangle flexible (16A;16B) à une structure (22A;22B) du véhicule,
**caractérisé en ce que** :
le procédé comprend en outre l'assemblage de chacune de la première sangle flexible (16A;16B) et de la deuxième sangle flexible (16A;16B) en reliant une pluralité de manchons de serrage (28) bout à bout au moyen d'un premier coupleur d'accouplement à rail (30) et de boulons (32).

15. Le procédé de la revendication 14, et comprenant en outre la fixation de la première sangle flexible (16A;16B) à la deuxième sangle flexible (16A;16B) en au moins un emplacement de chevauchement à l'aide d'un coupleur d'accouplement de sangles (18A;18B) ; et/ou dans lequel la première sangle flexible (16A;16B) a une première longueur, et dans lequel la deuxième sangle flexible (16A;16B) a une deuxième longueur qui est différente de la première longueur.
